Europäisches Patentamt

(19) European Patent Office

Office européen des brevets

(11) Numéro de publication: **0 364 322**
**A1**

(12) # DEMANDE DE BREVET EUROPEEN

(21) Numéro de dépôt: 89402664.0

(22) Date de dépôt: 28.09.89

(51) Int. Cl.⁵: **B28D 1/08 , B23D 61/18**

(30) Priorité: 14.10.88 FR 8813521

(43) Date de publication de la demande:
**18.04.90 Bulletin 90/16**

(84) Etats contractants désignés:
**BE CH DE ES GB IT LI**

(71) Demandeur: **LE DIAMANT INDUSTRIEL**
**Z.A.C. du Moulin**
**F-91160 Saulx-les-Chartreux(FR)**

(72) Inventeur: **Le Scanff, Alain**
**6, Avenue de Villeziers**
**F-91400 Orsay(FR)**

(74) Mandataire: **Flavenot, Bernard**
**Société ABRITT 17, rue du Docteur Charcot**
**La Norville**
**F-91290 Arpajon(FR)**

(54) Système de découpe de corps solides du type 'à câble'.

(57) La présente invention concerne les systèmes de découpe de corps solides.

Le système selon l'invention comprend essentiellement un câble 3, des pastilles abrasives 22,23 réparties le long du câble et séparées les unes des autres par un espace 26 d'une longueur donnée, et des moyens 28 pour bloquer les pastilles sur le câble, pour les empêcher de pivoter par rapport à l'axe longitudinal 27 du câble.

Application à la découpe de matériaux comme du granit, du marbre, etc.

fig.3

## SYSTEME DE DECOUPE DE CORPS SOLIDES DU TYPE "A CABLE"

La présente invention concerne les systèmes de découpe de corps solides par câble, comme ceux que l'on trouve notamment, mais non exclusivement, dans les carrières pour débiter des blocs de granit ou matériau analogue afin de leur donner des dimensions qui les rendent transportables et utilisables dans des domaines aussi divers que la construction, la sculpture et l'industrie.

Il est bien connu que des blocs de pierre, granit, etc, sont très souvent utilisés en toutes tailles dans de nombreux domaines. Lorsque ces corps sont aussi durs et d'aussi grandes dimensions, le problème de leur découpe ne se résout pas aussi facilement que pour des matériaux comme le bois, et même le fer ou analogue qui sont couramment utilisés dans l'industrie.

Aussi, pour découper ces matériaux, a-t-il été obligé de mettre au point des systèmes particulièrement adaptés à la nature, aux dimensions et à la qualité de ces matériaux.

Parmi toutes ces techniques, il en existe une qui est bien connue, c'est la technique dite "du câble de découpe". Cette technique est très avantageuse car elle permet la découpe de ces corps solides, comme le granit, quelle que soit leur plage de dimensions, et cela aussi bien dans les carrières pour dégager des énormes blocs qu'en atelier pour la découpe de blocs plus petits.

Les dispositifs de coupe par câble comprennent un câble animé d'un mouvement de translation avantageusement en boucle, dans un mouvement sans fin et dans un plan définissant le plan de coupe. Ce câble comporte, sur toute sa longueur, des moyens abrasifs qui, en frottant, du fait du mouvement de translation du câble sur le corps à découper, entraînent une usure progressive de celui-ci qui, à la longue, donne une découpe franche et nette dans le plan de découpe.

Dans une mise en oeuvre connue, ces câbles sont réalisés en acier, de section sensiblement circulaire, et des perles de matériau abrasif sont enfilées sur eux, en étant séparées les unes des autres par des manchons réalisés par exemple en plastique comme du polytétrafluoréthylène, ou même par des ressorts. Chaque perle est constituée d'un petit disque d'une certaine épaisseur comportant sensiblement en son centre une percée traversante d'une section au moins égale à celle du câble afin qu'elle puisse coulisser relativement facilement le long de celui-ci, le disque comportant en périphérie ou dans sa masse un matériau particulièrement abrasif, par exemple de la poudre ou des éclats de diamant. Les manchons de séparation sont montés eux aussi d'une façon coulissante sur le câble. Généralement, le diamètre extérieur de ces manchons est inférieur à celui du disque de la perle, de façon qu'entre chaque perle frottant sur le corps, il existe un espace annulaire qui permette l'élimination des poudres produites par la découpe.

Ces manchons sont avantageusement en un matériau relativement détériorable par frottement, afin que les disques puissent être constamment en contact avec le corps à découper et effectuer ainsi leur travail de friction abrasive de découpe.

Cette technique donne de bons résultats. Cependant, elle présente certains inconvénients, notamment en ce qui concerne la durée de vie des câbles qui est très faible. En effet, l'expérience montre que ces câbles arrivent assez rapidement à casser, et toujours essentiellement à des endroits où se positionnent les disques.

Il a également été constaté que, même si le câble ne cède pas, la qualité du plan de coupe se dégrade assez rapidement en ne donnant pas une surface de coupe parfaite, mais présentant par exemple de légères vagues ou ondulations qui ne sont pas acceptables pour certaines applications.

La présente invention a pour but de pallier cet inconvénient et de réaliser un système de découpe de corps solides par la technique du câble à pastilles abrasives, qui donne une surface de coupe de bonne qualité pendant toute sa durée de vie, cette durée de vie étant plus importante que celle des systèmes connus actuellement.

Plus précisément, la présente invention a pour objet un système de découpe de corps solides comprenant un câble et des pastilles abrasives réparties le long dudit câble, lesdites pastilles étant séparées les unes des autres par un espace d'une longueur donnée, caractérisé par le fait qu'il comporte en outre des moyens pour bloquer lesdites pastilles sur ledit câble pour les empêcher de pivoter autour de l'axe longitudinal dudit câble.

D'autres caractéristiques et avantages de la présente invention apparaîtront au cours de la description suivante donnée en regard des dessins annexés à titre illustratif mais nullement limitatif, dans lesquels :

La figure 1 représente schématiquement un système de découpe par câble selon l'invention,

Les figures 2 et 3 représentent deux vues perpendiculaires d'un premier mode de réalisation d'un câble selon l'invention constituant un élément du système selon la figure 1, la figure 2 étant une coupe référencée II-II sur la figure 3, et

Les figures 4 et 5 représentent un deuxième mode réalisation d'un câble selon l'invention présentant des avantages par rapport au premier mode selon les figures 2 et 3.

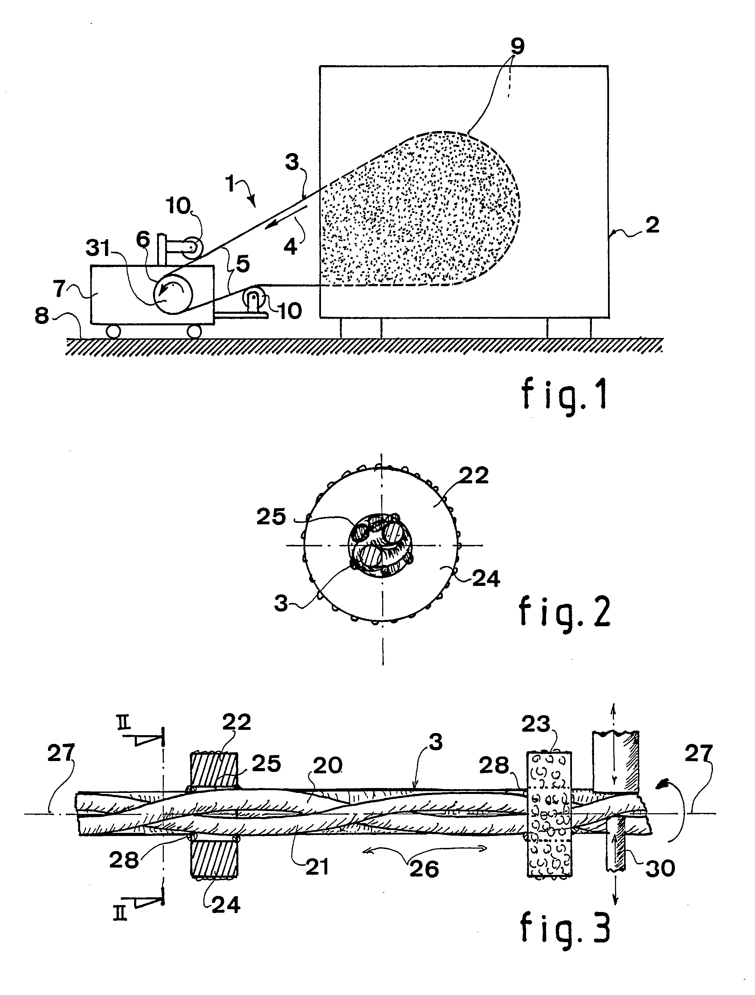

La figure 1 représente, sous forme très schématique, un système de découpe 1 d'un corps solide 2, par exemple un bloc de pierre, de granit ou analogue.

Ce système comprend un câble 3 sur lequel sont disposés des éléments abrasifs. Ce câble 3 est animé en translation 4, avantageusement dans un mouvement sans fin en boucle 5, au moyen d'un élément moteur 6-poulie 31 monté par exemple sur une embase 7 qui peut se déplacer sur des rails 8 afin de pouvoir maintenir une certaine tension sur le câble 3 au fur et à mesure qu'il avance dans la découpe 9 du corps 2. Cette embase peut aussi comporter des tendeurs 10 pour ne déplacer l'embase 7 pas à pas que lorsqu'ils sont en bout de course et ne peuvent plus assurer leur fonction de tension du câble.

Un tel système fonctionne de la façon suivante : on commence par définir le plan de coupe dans le bloc 2. L'embase 7 est alors positionnée de façon que l'élément moteur 6 par la poulie 31 entraîne le câble 3 dans ce plan de coupe. Puis, le bloc 2 est entouré par la boucle 5 qui est ensuite tendue à l'aide des tendeurs 10 et en déplaçant l'embase 7 sur les rails 8. Lorsque le câble est correctement tendu, l'embase 7 est bloquée en position. Le câble 3 est alors animé d'un mouvement de translation 4, au moyen du moteur 6 et de la poulie 31.

Les éléments abrasifs situés le long du câble commencent à entamer le bloc pour réaliser la découpe 9 au fur et à mesure que le câble de découpe 3 se translate en frottant contre le bloc 2. L'embase est reculée en fonction de l'avance de cette découpe 9 et les tendeurs 10 peuvent compenser temporairement des quantités d'avance partielle du câble.

Selon l'invention, le long de ce câble 3, figures 2 et 3, sont positionnées des pastilles abrasives 22, 23 avantageusement constituées de disques 24 cylindriques de révolution, comportant au centre une percée traversante 25 d'une section au moins égale à la section la plus grande du câble 3, de façon que ces pastilles puissent être enfilées sur le câble et qu'elles puissent être réparties le long de celui-ci en étant espacées les unes des autres de distances 26 qui peuvent être toutes égales, ou différentes, selon les cas.

Les pastilles abrasives peuvent être réalisées selon les techniques habituelles, par exemple, par concrétion de poudre de diamant ou par dépôt électrolytique. Ces techniques connues en elles-mêmes ne seront pas plus amplement décrites ici.

De plus, le système comprend des moyens pour empêcher les pastilles de pivoter par rapport à l'axe longitudinal 27 du câble, et des moyens pour les empêcher de se déplacer en translation suivant cet axe, afin qu'elles restent positionnées au même endroit sur le câble. Ces moyens de liaison pour bloquer les pastilles peuvent être, par exemple, des points de soudure 28 adaptés à la nature des matériaux des pastilles 22, 23 et du câble 3. Ils peuvent être aussi, par exemple, des points de sertissage, de brasure ou analogue, des points de collage par résine polymérisable ou thermodurcissable, etc.

Le système comprend en outre des moyens pour pouvoir translater le câble suivant la direction 4, tout en lui faisant avantageusement subir en plus une rotation autour de son axe longitudinal, au moins séquentiellement, sinon en continu. Les pastilles 22, 23 étant bloquées sur le câble, elles subissent les mêmes déplacements que celui-ci.

Les moyens de déplacement du câble en translation et en rotation peuvent être de tout type adapté à sa structure. Dans une forme illustrée à titre d'exemple, le câble comporte sur sa périphérie au moins deux liens torsadés 20, 21, figure 3, pour former un câble unique. Dans ce cas, les moyens pour entraîner le câble en rotation autour de son axe longitudinal peuvent être constitués par un doigt guide 30 qui ne puisse être en contact qu'avec les parties des deux liens torsadés 20, 21 situées entre les pastilles pour assurer la rotation du câble lorsque celui-ci est animé en translation par l'élément moteur 6-poulie 31. Ce doigt 30 est par exemple monté sur l'embase 7, à l'entrée de la poulie d'entraînement 31 solidaire de l'axe moteur 6, en étant commandé séquentiellement en translation suivant une direction perpendiculaire au déplacement 4 du câble, de façon à laisser passer les pastilles et à entraîner le câble en rotation après le passage de chacune d'elles. Les pastilles abrasives étant solidaires du câble, elles sont entraînées dans la même rotation.

Le doigt guide 30 n'a été donné que comme exemple de mise en oeuvre des moyens permettant d'obtenir la rotation du câble autour de son axe longitudinal 27. Il peut aussi être utilisé des roulettes frottant latéralement sur le câble entre chaque pastille.

Le système décrit ci-dessus présente de multiples avantages par rapport à ceux de l'art antérieur. En effet, en étant maintenues fixes par rapport au câble, les pastilles abrasives ne peuvent plus entraîner l'usure prématurée du câble par frottements sur lui. Celui-ci a donc alors une durée de vie plus longue. De plus, comme les pastilles subissent des rotations régulières pouvant être éventuellement programmées, leur usure est régulière sur tout leur pourtour, ce qui permet d'obtenir des surfaces de coupe de haute qualité quant à la planéité, c'est-à-dire, ne présentant pas les ondulations mentionnées ci-avant.

Le système décrit ci-avant peut encore cependant ne pas donner totalement satisfaction. En effet, lorsque le câble doit subir des flexions relativement importantes, notamment quand il passe sur des poulies ayant des rayons de courbure très faibles, il peut se produire des effets de cisaillement de la paroi externe du câble au niveau des pastilles, et donc la rupture prématurée de celui-ci.

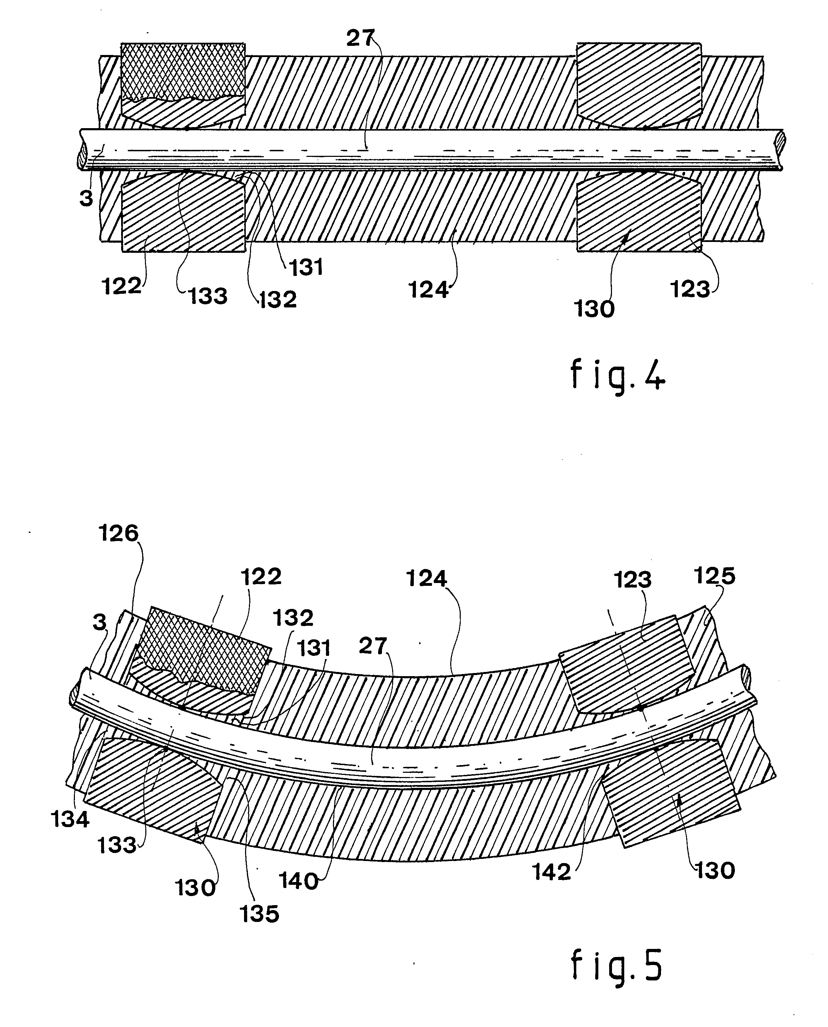

Pour pallier cet inconvénient, comme illustré sur les figures 4 et 5, les pastilles 122, 123, sont avantageusement constituées par des pièces 130 en forme sensiblement de cylindre comportant un creux traversant central 131 dont la surface 132 est de forme convexe sensiblement de révolution. La convexité de cette surface peut être de différents types, d'une courbure circulaire ou à rayon variable, par exemple une portion de paraboloïde ou d'hyperboloïde de révolution.

Le creux traversant 131 est réalisé de façon que la section de plus petite valeur 133 de sa surface convexe de révolution 132 soit sensiblement égale à la section dudit câble, qu'elle soit située sensiblement à égale distance des deux extrémités 134, 135 du creux 131, et qu'elle soit au contact du câble suivant sensiblement une ligne circulaire le long de laquelle la pastille est éventuellement liée au câble, par sertissage ou tout autre moyen.

Dans ce cas, la liaison des pastilles avec le câble pour les empêcher de pivoter autour de lui, ou de se translater, est assurée en outre par des entretoises 124, 125, 126, chaque entretoise étant disposée entre deux pastilles consécutives et de façon à remplir les espaces annulaires 142 compris entre la surface 132 du creux 131 et la surface latérale 140 du câble. Ces entretoises sont avantageusement réalisées dans un matériau présentant une certaine élasticité au moins à l'écrasement, par exemple un caoutchouc de relativement grande rigidité, et une certaine facilité à être détérioré par frottement.

Pour réaliser un tel système, on commence par enfiler les pastilles sur le câble en les répartissant sensiblement régulièrement le long de celui-ci et, en les solidarisant avec le câble le long de la courbe circulaire définie ci-avant. Les entretoises sont ensuite, obtenues, notamment par moulage du matériau choisi, et ce, de préférence en maintenant le câble 3 en position rectiligne, de telle sorte que, lorsque le matériau est coulé dans le moule, il remplisse parfaitement et uniformément les espaces annulaires 142 et relie les pastilles entre elles, en formant gaine autour du câble, au contact de celui-ci. Avantageusement, le diamètre des entretoises entre les pastilles est inférieur à celui de ces pastilles.

Ainsi, comme illustré sur la figure 4, les pastilles abrasives 122, 123 sont parfaitement maintenues les unes par rapport aux autres le long du câble 3 et les entretoises, avec le sertissage des pastilles sur la section 133, les empêchent de glisser le long de celui-ci et de pivoter autour de son axe 27.

De plus, lorsque le câble subit une flexion, par exemple lors du passage dans une gorge de poulie, il prend la forme telle qu'illustrée sur la figure 5, et les pastilles n'entraînent au niveau de sa surface latérale 140 aucun cisaillement, notamment aux extrémités 134 et 135 du creux traversant 131, puisque le câble ne vient pas au contact des bords contondants de ces extrémités et puisque la variation de distance entre la surface latérale 140 du câble et ces bords est absorbée et amortie par la compression de la partie moulée des entretoises qui se trouve insérée dans le volume annulaire 142 compris entre la surface 132 du creux 131 et la surface 140 du câble.

Il est à noter que l'élasticité du matériau constituant l'entretoise permet à la pastille de se repositionner de façon concentrique autour du câble, et d'effectuer correctement son travail d'abrasion dès la fin du passage dans la gorge d'une poulie. Cet avantage est obtenu quelle que soit la position du câble autour de son axe longitudinal 27, puisque la surface du creux est de révolution, ce qui permet à la partie de l'entretoise occupant l'espace annulaire 142 d'être déformée sur toute sa périphérie étant donné, comme décrit précédemment, que, pour réaliser des découpes parfaitement planes, il est nécessaire de faire tourner le câble autour de son axe longitudinal, afin d'obtenir une usure uniforme sur tout le pourtour des pastilles abrasives.

Pour ce faire, le système comprend en outre avantageusement, comme pour le mode de réalisation décrit ci-avant, des moyens pour translater le câble suivant la direction 4, tout en lui faisant subir simultanément une rotation autour de son axe longitudinal 27, séquentiellement ou en continu. Ces moyens de déplacement du câble en translation et en rotation peuvent être de tout type adapté à sa structure. Ils peuvent par exemple être constitués par des pinces prenant les entretoises et les faisant pivoter sur elles-mêmes par des rotations successives de faibles amplitudes.

Une telle réalisation de câbles pour la découpe, par exemple de blocs de granit, permet à ces câbles d'avoir des durées de vie très supérieures à celles des câbles de même type réalisés selon l'art antérieur, et ce, quelles que soient les éventuelles déformations qu'ils peuvent subir.

## Revendications

1. Système de découpe (1) de corps solides (2) comprenant un câble (3) et des pastilles abrasives (22,23) réparties le long dudit câble, lesdites pastilles étant séparées les unes des autres par un espace (26) d'une longueur donnée, des moyens (28) pour bloquer lesdites pastilles sur ledit câble pour les empêcher de pivoter par rapport à l'axe longitudinal (27) dudit câble et de se déplacer en translation suivant l'axe longitudinal (27) dudit câble (3), et des moyens (20,21,30) pour animer ledit câble en rotation autour de son axe longitudinal (27), caractérisé par le fait que les moyens pour bloquer lesdites pastilles (122,123) sur ledit câble pour les empêcher de se déplacer en translation suivant l'axe longitudinal (27) dudit câble (3) sont constitués par des entretoises (124,125,126), chaque entretoise étant montée entre deux pastilles consécutives sur ledit câble en entourant ledit câble et au contact de celui-ci et des pastilles, lesdites entretoises étant en un matériau présentant au moins une certaine élasticité à l'écrasement et étant constituées par des pièces (130) en forme sensiblement de cylindre creux, la surface (132) du creux traversant (131) dudit cylindre étant sensiblement de forme convexe sensiblement de révolution, la section de plus petite valeur (133) de ladite surface convexe de révolution (132) étant sensiblement égale à la section dudit câble et étant située sensiblement à égale distance des deux extrémités (134,135) dudit creux, une partie desdites entretoises étant ainsi insérée dans le volume annulaire compris entre la surface dudit creux et la surface dudit câble.

2. Système selon la revendication 1, caractérisé par le fait qu'il comporte en outre des points de liaison (28) entre lesdites pastilles (22,23) et ledit câble.

3. Sytème selon la revendication 2, caractérisé par le fait que lesdits points de liaison sont constitués par l'un des moyens suivants, points de soudure, points de sertissage, points de brasure, points de collage.

fig.1

fig.2

fig.3

fig.4

fig.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 106 017 (D.H. PROWSE AND CO. LTD) <br> * Page 5, lignes 24-30; page 7, lignes 36-39; page 8, lignes 1-7; figures 6,8 * | 1-3 | B 28 D 1/08 <br> B 23 D 61/18 |
| A | IT-A- 573 635 (A. PERISSINOTO) <br> * Page 2, lignes 35-37,72-75; figures 1,3 * | 1-3 | |
| A | DE-A-3 041 830 (S. GEBHART et al.) <br> * Revendications 1-11; figures 3-5 * | 1-3 | |
| A | GB-A- 759 505 (THE ANDERSON-GRICE CO.) <br> * Revendications 1-7; figures 2-5 * | 1-3 | |
| A | FR-A-1 265 542 (F. PISTELLI) <br> * En entier * | 1-3 | |
| A | EP-A-0 160 625 (E. BROCCO et al.) <br> * En entier, en particulier, page 1, lignes 6-30 * | 1-3 | DOMAINES TECHNIQUES RECHERCHES (Int. Cl.5) |
| A | EP-A-0 213 434 (DIAMOND PAUBER SRL) <br> * Colonne 4, lignes 29-44; figures 2,3 * | 1-3 | B 23 D <br> B 28 D |

Le présent rapport a été établi pour toutes les revendications

| Lieu de la recherche | Date d'achèvement de la recherche | Examinateur |
|---|---|---|
| LA HAYE | 15-01-1990 | MOET H.J.K. |